Europäisches Patentamt

European Patent Office

Office européen des brevets

(19)

(11) Veröffentlichungsnummer: **0 465 972 A2**

## (12) EUROPÄISCHE PATENTANMELDUNG

(21) Anmeldenummer: **91110838.9**

(22) Anmeldetag: **29.06.91**

(51) Int. Cl.5: **F16B 11/00**

(30) Priorität: **09.07.90 DE 4021796**

(43) Veröffentlichungstag der Anmeldung:
**15.01.92 Patentblatt 92/03**

(84) Benannte Vertragsstaaten:
**AT BE CH DE FR GB IT LI NL**

(71) Anmelder: **Konstruktionsbüro Margot Steinmetz**
**Salinenstrasse 27**
**W-6550 Bad Kreuznach(DE)**

(72) Erfinder: **Steinmetz, Georg**
**Salinenstrasse 27**
**W-6550 Bad Kreuznach(DE)**

(74) Vertreter: **Schickedanz, Willi, Dipl.-Ing.**
**Langener Strasse 68**
**W-6050 Offenbach/Main(DE)**

(54) **Verbindungsanordnung.**

(57) Die Erfindung betrifft eine Verbindungsanordnung zwischen Kunststoffteilen und Aluminiumprofilen, die bei Aluminiumfenstern und -türen eingesetzt werden können. Die Aluminiumprofile sind hierbei an drei Stellen mit Rändelungen versehen, die bei der Herstellung der Verbindung zwischen Aluminiumprofil und Kunststoffteil in die gegenüberliegenden Oberflächen der Kunststoffteile eindringen. Durch diese Maßnahme ergibt sich eine äußerst feste Verbindung zwischen Kunststoffteilen und Aluminiumprofilen, die eine Verschiebung ausschließt.

EP 0 465 972 A2

Die Erfindung betrifft eine Verbindungsanordnung nach dem Oberbegriff des Patentanspruchs 1.

Aluminiumtüren oder -fenster werden in der Regel zweischalig ausgebildet, d. h. es ist eine ins Freie gerichtete Schale und eine in den Wohninnenraum gerichtete Schale vorgesehen. Beide Schalen werden über schlecht wärmeleitende Elemente miteinander verbunden, damit die Außentemperaturen nicht über das gut wärmeleitende Aluminium in den Wohnraum gelangen und umgekehrt.

Als schlecht wärmeleitendes Material werden Kunststoffe verwendet, die glasfaserverstärkt sein können. Bei der Verbindung dieser Kunststoffe mit den Aluminiumteilen tritt das Problem der hinreichenden Festigkeit auf. Metall- und Kunststoffteile müssen so fest miteinander verbunden sein, daß sie sich auch bei hoher Beanspruchung nicht lösen, d. h. sie müssen den Anforderungen bezüglich Standsicherheit, Schubfestigkeit und Querzugfestigkeit genügen.

Es ist bereits eine Verbindungsanordnung bekannt, bei der ein hammerförmiges Ende eines Kunststoffteils in eine hammerförmige Aussparung eines Aluminiumteils ragt (EP-B1-0 172 575). An der hammerförmigen Aussparung des Aluminiumteils ist dabei auf einer Seitenfläche ein biegsames Ansatzstück vorgesehen, das in eine Aussparung des Kunststoffteils hineingedrückt wird und mit diesem dann bündig abschließt. Damit ein fester Preßsitz zwischen Aluminium- und Kunststoffteilen gewährleistet ist, ist das biegsame Ansatzstück aus Aluminium mit Riffelungen versehen, die sich beim Einführen des hammerförmigen Aluminiumteils in die hammerförmige Aussparung im Kunststoffteil in den Kunststoff eindrücken.

Bei weiteren bekannten Verbindungsanordnungen zwischen gut und schlecht leitenden Elementen können die Elemente relativ leicht in die Profilebene hinein verschoben werden, was zu unzureichenden Festigkeiten führt (DE-B-1 101 734, DE-A-3 407 528, DE-U-8 017 253). Es gibt jedoch eine Reihe von Anwendungsfällen, bei denen eine hohe Festigkeit gewünscht wird.

Der Erfindung liegt deshalb die Aufgabe zugrunde, die Verschiebungs-Festigkeit einer Metall-Kunststoff-Verbindung zu erhöhen.

Diese Aufgabe wird gemäß den Merkmalen des Patentanspruchs 1 gelöst.

Ein Ausführungsbeispiel der Erfindung ist in der Zeichnung dargestellt und wird im folgenden näher beschrieben. Es zeigen:

Fig. 1     einen wärmeisolierenden Kunststoffsteg, der mit Metallteilen verbindbar ist;

Fig. 2     ein Metallteil, in welches ein Ende des Kunststoffstegs gemäß Fig. 1 eingreifen kann;

Fig. 3     eine Verbindung zwischen einem Kunststoffteil und einem Metallteil;

Fig. 4a     eine Variante der Verbindung gemäß Fig. 3, bei welcher eine Auflagefläche zwischen Metallteil und Kunststoffsteg schräg verläuft;

Fig. 4b     eine Darstellung einer Rändelung;

Fig. 5     eine Darstellung zur Erläuterung des Rändelverfahrens.

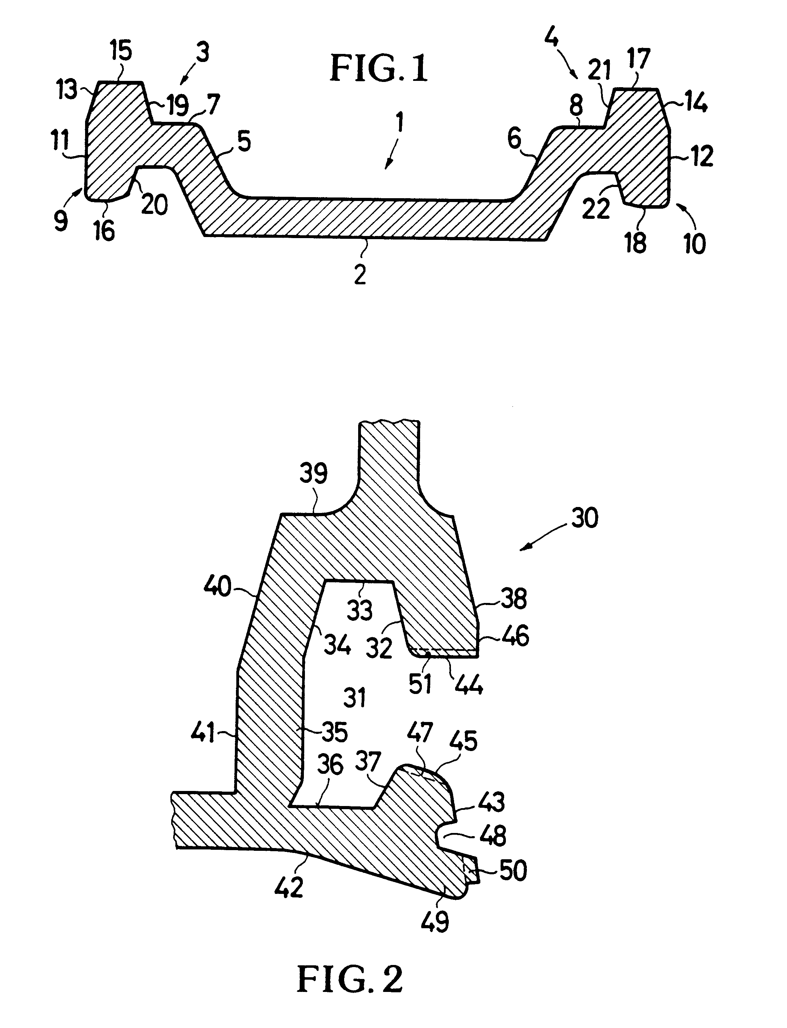

In der Fig. 1 ist ein Querschnitt durch das Profil eines gut wärmeisolierenden Stegs 1, vorzugsweise aus glasfaserverstärktem Kunststoff, dargestellt, der zur Verbindung zweier Metallelemente dient.

Dieser Steg 1 weist einen mittleren Teil 2 mit zwei hierzu symmetrisch angeordneten Seitenteilen 3, 4 auf. Die Seitenteile 3, 4 setzen am mittleren Teil 2 an und nehmen zunächst einen Winkel von 115 Grad hierzu ein. Dasjenige Stück 5, 6 der Seitenteile 3, 4, das im 115-Grad-Winkel verläuft, mündet in ein parallel zum mittleren Teil 2 verlaufenden Stück 7, 8, das seinerseits in ein hammerförmiges Ende 9, 10 mündet. Das hammerförmige Ende 9, 10 weist eine senkrecht zum mittleren Teil 2 verlaufende Fläche 11, 12 auf, an die oben eine um 15 Grad nach innen geneigte Fläche 13, 14 anschließt. Das obere Ende der Fläche 13, 14 und das untere Ende der Fläche 11, 12 gehen in parallel bzw. quasi-parallel zum mittleren Teil 2 verlaufende Flächen 15, 16 bzw. 17, 18 über. An diese Flächen 15, 16 bzw. 17, 18 schließen jeweils zwei Flächen 19, 20; 21, 22 an, die 15 Grad zu einer Linie geneigt sind, die senkrecht auf dem mittleren Teil 2 steht.

In der Fig. 2 ist ein Aluminiumteil 30 dargestellt, das Bestandteil einer nicht gezeigten großen Einheit, beispielsweise der Innenschale eines Aluminiumfensters ist. Dieses Aluminiumteil weist eine hammerförmige Aussparung 31 auf, in welche ein hammerförmiges Ende 9, 10 des Stegs 1 eingeführt werden kann. Die Aussparung 31 wird von sechs Innenflächenteilen 32 bis 37 des Aluminiumteils 30 gebildet, zu denen, im wesentlichen parallel, Außenflächenteile 38 bis 43 verlaufen. Das Innenflächenteil 37 ist zum Innenflächenteil 36 in einem Winkel von 120 Grad geneigt, während das Außenflächenteil 43 hierzu in einem Winkel von 10 Grad geneigt ist.

Der Zugang zur Aussparung 31 wird durch zwei Flächen 44, 45 gebildet, von denen die obere Fläche 44 an die Fläche 32 und an einer Fläche 46 anschließt. Die untere Fläche 45 ist zur Fläche 36 in einem Winkel von 15 Grad nach unten geneigt.

Die Flächen 37, 43, 45 bilden eine Kappe, die auf ihrer Oberseite eine Riffelung 47 aufweist. Im Anschluß an die Fläche 43 dieser Kappe ist eine Ausnehmung 48 vorgesehen, die in einen Vorsprung 49 übergeht, der ebenfalls mit einer Riffelung 50 versehen ist.

Eine dritte Riffelung 51 befindet sich an der Fläche 44.

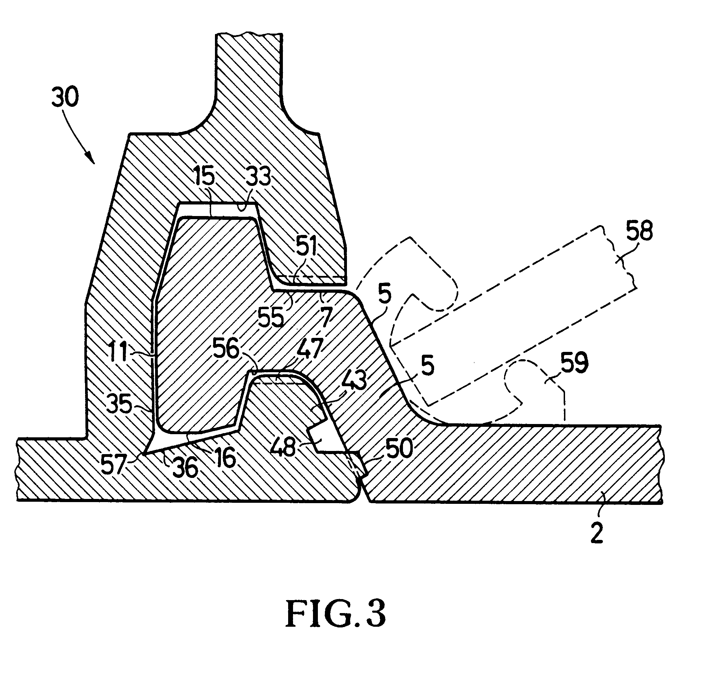

In der Fig. 3 ist dargestellt, wie das Aluminiumprofil 30 mit dem Kunststoffprofil 1 in Verbindung steht. Man erkennt hierbei, daß die Rändelung 50 in das Stück 5 eingedrückt ist. Die weitere Rändelung 51 greift in die Oberseite 55 des Stücks 7 des Stegs 1, während eine dritte Rändelung 47 in die Unterseite 56 dieses Stücks eingreift. Zwischen den Flächen 35 und 36 befindet sich eine Sollbiegestelle, an der das Material verdünnt ist.

Weitere Aussteifungsmöglichkeiten, die den aus EP-B1-0 172 575 bekannten Aussteifungsmöglichkeiten entsprechen, sind mit 58 und 59 bezeichnet.

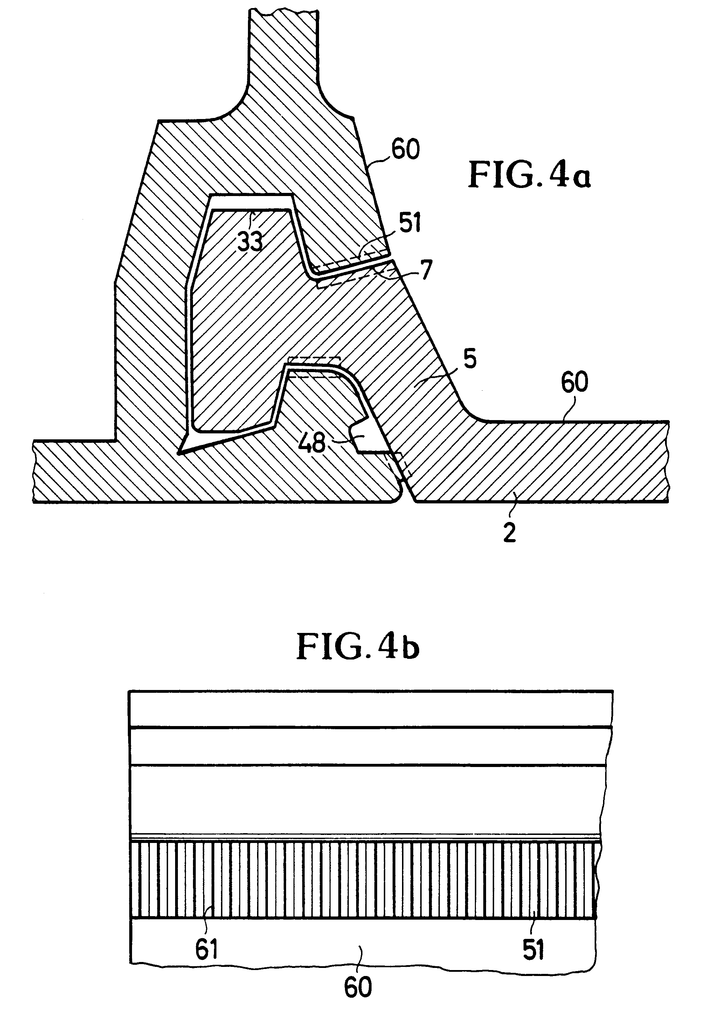

In der Fig. 4a ist eine Variante der Vorrichtung gemäß Fig. 3 dargestellt, bei welcher die meisten Elemente mit den Elementen der Fig. 3 übereinstimmen. Diese Elemente sind deshalb mit denselben Bezugszahlen versehen.

Geändert sind dagegen die relativen Winkellagen der Flächen 7 und 51. Diese Flächen 7, 51 sind gegenüber der Oberfläche 60 des Elements 2 geneigt, damit eine einfachere Fertigung der Rändelungen möglich ist.

Aus der Fig. 4b ist die Richtung der Rändelung ersichtlich. Man erkennt hierbei, daß die Rändelung derart ausgerichtet ist, daß Querverschiebungen nicht möglich sind. Insbesondere bei Hochbauten ab dem achten Stockwerk werden aus statischen Gründen hohe Anforderungen an die Querverschiebungsfestigkeit gestellt, die durch diese Rändelungen erreicht wird.

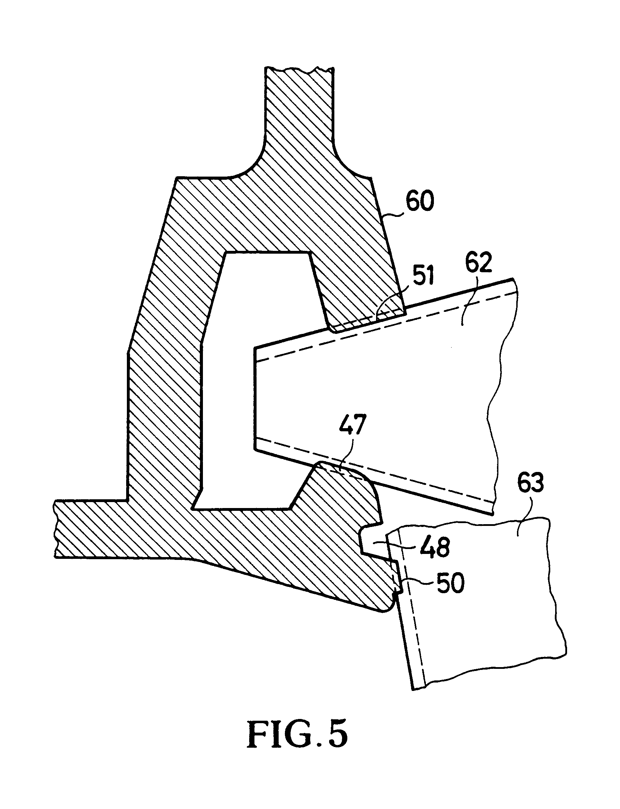

In der Fig. 5 ist ein Aluminiumprofil dargestellt, das dem Profil gemäß Fig. 4a entspricht, bei dem jedoch der unterste Teil leicht nach unten gebogen ist, so daß ein Rändel-Kegelrad 62 eingeführt werden kann. Das Rändel-Kegelrad 62 ist in der Fig. 5 symbolisch dargestellt. Es kann sich hierbei um ein einziges Rändelrad handeln, das zuerst die Fläche 51 und dann die Fläche 47 rändelt. Hierzu muß bei der ersten Rändelung selbstverständlich ein Spalt zwischen Rändelrad 62 und Fläche 47 bestehen, während bei der zweiten Rändelung ein Spalt zwischen dem Rändelrad 62 und der Fläche 51 vorhanden sein müßte. Statt einem Rändelrad können jedoch auch zwei in der Zeichenebene hintereinander angeordnete Rändelräder vorgesehen sein, von denen das eine die Fläche 51 und das andere die Fläche 47 rändelt. Ein weiteres Rändelrad 63 rändelt die Fläche 50. Diese Rändelung kann gleichzeitig mit den anderen Rändelungen durchgeführt werden. In der Praxis werden die Rändelräder 62, 63 ortsfest angeordnet und mit ihrer Rändelfläche nach oben ausgerichtet sein. Das Aluminiumprofil wird dann über diese Rändelräder 62, 63 unter Druck aus der Zeichenebene heraus oder in diese hinein bewegt.

Durch die schräge Ausbildung der Fläche 51 ist es möglich, ein Kegelrad als Rändelrad zu verwenden, das es wiederum ermöglicht, die ganze Fläche 51 bzw. 47 zu rändeln und nicht nur Randbereiche oder die Kanten dieser Flächen.

Es gibt indessen auch Spezialrändelmaschinen, Z. B. Diskusrändler, mit denen gleichzeitig zwei gerade Flächen eines Profils gerändelt werden können.

Theoretisch könnten Verschiebekräfte auch durch eine Rändelung der Flächen 32, 33, 34, 35, 36, 37 aufgenommen werden, doch sind diese Flächen zum einen schwer oder gar nicht zu rändeln und zum andern wurde auf diesen Flächen bei der Verbindung von Kunststoffelement und Aluminiumteil kein besonderer Druck ausgeübt, so daß sich die Rändelungen im Aluminiumprofil nicht tief in die Oberfläche des Kunststoffelements eingraben würden.

**Patentansprüche**

1. Verbindungsanordnung mit einem gut wärmeleitenden Profil (30) und einem schlecht wärmeleitenden Profil (2);

    1.1 wobei das schlecht wärmeleitende Profil (2) wenigstens einen hammerförmigen Kopf (9, 10),

    1.2 einen Steg (2),

    1.3 einen im wesentlichen parallel zu dem Steg (2) verlaufenden Hals (7)

    1.3.1 mit einer oberen und einer unteren Fläche (55; 56)

    1.4 sowie ein Verbindungsstück (5) zwischen Hals (7) und Steg (2) aufweist, wobei 1.4.1 das Verbindungsstück zu dem Steg (2) in einem Winkel größer als 90 Grad geneigt ist und wobei

    1.5 das gut wärmeleitende Profil (30) nach der Herstellung der Verbindung zwischen den beiden Profilen (30, 2)

    1.5.1 mit einer Riffelung (50) auf dem Verbindungsstück (5) aufliegt und

    1.5.2 den hammerförmigen Kopf (9, 10) mittels zweier Stege derart hintergreift, daß sich die Enden dieser Stege in der unmittelbaren Nachbarschaft der oberen und unteren Fläche (55; 56) befinden,

    dadurch gekennzeichnet,

    1.6 daß die Enden der beiden Stege mit Riffelungen (51, 47) oder Aufrauhungen versehen sind, die in die obere Fläche (55) bzw. die untere Fläche (56) des Halses (7) eingreifen.

2. Verbindungsanordnung nach Anspruch 1, **dadurch gekennzeichnet**, daß die Rändelungen (47, 51; 50) derart ausgebildet sind, daß sie Querverschiebungen zwischen dem gut wärmeleitenden Profil (30) und dem schlecht wärmeleitenden Profil (2) verhindern.

3. Verbindungsanordnung nach Anspruch 1, dadurch gekennzeichnet, daß das Profil des hammerförmigen Kopfs (9, 10) sechs Flächen (21, 17, 14, 12, 18, 22) aufweist, von denen zwei Flächen (17, 18) im wesentlichen parallel zueinander verlaufen, Zwei andere Flächen (21, 14) einander gegenüberliegen und einen Winkel einschließen und zwei weitere Flächen (22, 12) ebenfalls einander gegenüberliegen und einen Winkel einschließen, wobei die Fläche (12) die Größe der gegenüberliegenden Fläche (22) zuzüglich der Dicke des Halses (8) aufweist.

4. Verbindungsanordnung nach Anspruch 1, dadurch gekennzeichnet, daß eine Riffelung (50) des wärmeleitenden Profils (2) am Ende (49) eines Stegs (42, 36) angeordnet ist, der einen verjüngten Ansatz aufweist, so daß der Steg relativ leicht umgebogen werden kann.

5. Verbindungsanordnung nach Anspruch 1, dadurch gekennzeichnet, daß die Flächen (7, 56) des Halses und die zugeordneten Riffelungen (51, 47) des gut wärmeleitenden Profils (30) zueinander geneigt sind.

6. Verfahren für die Herstellung der Rändelungen (47, 50, 51) bei dem gut wärmeleitenden Profil, dadurch gekennzeichnet, daß ein Rändeldorn (62) für zwei Rändelungen (47, 51) vorgesehen ist und eine Rändelvorrichtung (63) für eine weitere Rändelung (50) vorgesehen ist.

7. Verfahren nach Anspruch 1, dadurch gekennzeichnet, daß die Rändeldorne (62, 63) ortsfest angeordnet sind und das gut wärmeleitende Profil (60) bewegt wird.

8. Verbindungsanordnung nach Anspruch 2, dadurch gekennzeichnet, daß die Riffelungen dreieckförmige Erhebungen sind.

# FIG.1

# FIG.2

FIG.3

FIG.4a

FIG.4b

FIG.5